# FASCICULE DE BREVET EUROPEEN

(11) **EP 2 981 570 B1**
(45) Date de publication et mention de la délivrance du brevet: **19.12.2018**
(21) Numéro de dépôt: 14711995.2
(22) Date de dépôt: 25.03.2014
(51) Int. Cl.: C08J 5/12, B29C 65/02, B29C 65/34, B29K 21/00, B29K 105/06

(54) **LIAISON STRUCTURALE SOUDÉE ENTRE UN MATÉRIAU COMPOSITE À MATRICE THERMOPLASTIQUE HAUTE PERFORMANCE ET UN ÉLASTOMÈRE PAR FONCTIONNALISATION EN MODE POUDRE**
GESCHWEISSTE STRUKTURVERBINDUNG ZWISCHEN EINEM LEISTUNGSSTARKEN THERMOPLASTISCHEN MATRIXVERBUNDSTOFF UND EINEM ELASTOMER DURCH FUNKTIONALISIERUNG IM PULVERMODUS
WELDED STRUCTURAL LINK BETWEEN A HIGH-PERFORMANCE THERMOPLASTIC MATRIX COMPOSITE MATERIAL AND AN ELASTOMER BY FUNCTIONALISATION IN POWDER MODE

(30) Priorité: 03.04.2013 FR 1352987
(43) Date de publication de la demande: 10.02.2016
(73) Titulaire: ArianeGroup SAS, 75015 Paris (FR)
(72) Inventeur: MENOCHET, Audrey, F-33110 Le Bouscat (FR); COLIN, Christophe, F-33160 St Medard en Jalles (FR)
(74) Mandataire: Ipside
(86) Numéro de dépôt international: PCT/EP2014/055924
(87) Numéro de publication internationale: WO 2014/161745

(56) Documents cités:
- EP-A2- 0 440 410
- WO-A1-2008/147955
- DE-A1- 2 746 544
- GB-A- 1 579 433
- JP-A- H06 134 870
- US-A- 3 783 061

## Description

### DOMAINE DE L'INVENTION

L'invention concerne le domaine des assemblages chimiques structuraux de matériaux différents, et plus précisément l'assemblage de matériaux élastomères avec des matériaux thermoplastiques.

De manière très générale, on appelle ici matériau thermoplastique tout matériau comportant un certain pourcentage de matériau thermoplastique constituant une matrice, qu'il s'agisse d'un matériau constitué seulement de matériau thermoplastique ou encore par exemple d'un matériau composite à fibres continues et à matrice thermoplastique.

L'invention trouve, par exemple, une application particulière dans le contexte de la fabrication d'étages propulsifs de fusées à poudre, pour réaliser la liaison du réservoir avec les jupes.

### CONTEXTE DE L'INVENTION - ART ANTERIEUR

L'assemblage par soudage de deux matériaux composites à matrice thermoplastique haute performance fait généralement appel à des procédés d'assemblage connus. Par ailleurs, afin de porter la zone d'assemblage à la température voulue, il est possible de mettre en oeuvre plusieurs principes connus de chauffage tels que les chauffages par gaz chaud (étuve, autoclave), par vibration (ultrasons, rotation), par induction, par résistance, etc... Ce type d'assemblage est notamment décrit dans le livre de Michael J. Troughton intitulé « Handbook of plastics joining » (Plastics Design Library). ISBN: 978-1-884207-17-4.

Inversement, il n'existe pas, à ce jour, de moyen connu permettant de réaliser l'assemblage par soudage d'un matériau composite à matrice thermoplastique et d'un matériau de type élastomère. Cette absence semble tirer son origine du fait que, dans la mesure où les élastomères n'ont pas la propriété de passer de façon réversible de l'état solide à l'état fondu, une technique d'assemblage nécessitant de chauffer les matériaux à assembler, au moins au niveau de la zone d'assemblage, ne semble pas évidente pour l'homme du métier.

Pour certaines applications, les techniques d'assemblage connues, permettant d'assembler un élément en matériau thermoplastique avec un élément en matériau polymère ne présentent pas les qualités requises, en termes de tenue mécanique notamment.

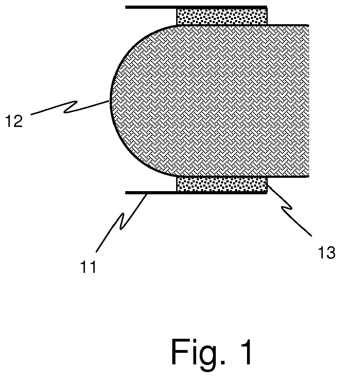

C'est le cas par exemple, comme l'illustre schématiquement la figure 1, pour l'assemblage d'une virole 11 (en matériau métallique ou composite à matrice thermoplastique ou thermodurcissable) sur un réservoir 12 en composite à matrice thermoplastique pour constituer un étage propulsif de lanceur à poudre, ou un réservoir de gaz grand public.

En effet cet assemblage nécessite l'insertion d'une couche 13 de matériau élastomère au sein de la liaison, la couche de matériau élastomère ayant pour rôle d'absorber les déformations différentielles importantes qui apparaissent entre les 2 structures. Par suite l'insertion de cette couche 13 de matériau élastomère intercalaire nécessite de réaliser l'assemblage de cette couche sur les deux éléments en matériau composite que constituent le réservoir 12 et la virole 11, cet assemblage devant nécessairement être de grande qualité mécanique, du fait des contraintes imposées à l'assemblage.

Or, en termes de tenue mécanique une liaison soudée est généralement supérieure à une liaison collée. En effet après soudage, il n'y a plus d'interface différentiée ente les deux pièces assemblées, du fait de la diffusion des molécules d'une pièce à l'autre, alors que dans le cas d'un collage, il y a autant d'interfaces que de couches nécessaires à la création de la liaison, couches parmi lesquelles on trouve principalement outre la couche d'adhésif proprement dite, les primaires d'adhésion, ainsi que les traitements appliqués aux surfaces à assembler.

Par ailleurs dans le cas du soudage, on supprime également les contraintes engendrées par la préparation des surfaces avant assemblage et par leur protection contre les pollutions, ces opérations étant nécessaires, voire impératives, dans le cas d'un assemblage par collage.

Le document DE 27 46 544 A1 décrit un procédé pour réaliser une liaison structurale soudée entre un poly(chlorure de vinyle) et un matériau élastomère comportant l'incorporation d'une poudre polyéthylène dans l'élastomère.

Le document GB 1 579 433 A décrit un procédé pour réaliser une liaison structurale soudée entre un poly(chlorure de vinyle) renforcé par du nylon et un élastomère, comportant une première opération de fonctionnalisation du matériau élastomère, la fonctionnalisation étant réalisée par peinture de la surface du matériau élastomère avec une solution comprenant de l'éthylène-acétate de vinyle, et une seconde opération de soudage proprement dit, durant laquelle on réalise le soudage (par radio fréquence) du poly(chlorure de vinyle) renforcé par du nylon à la couche fonctionnalisée du matériau élastomère.

Le document EP 0 440 410 A2 décrit un procédé pour joindre un matériau pastique renforcé de fibres avec un caoutchouc dans lequel on dispose un adhésif et un matériau générateur de chaleur entre le plastique et le caoutchouc vulcanisé et on élève la température pour coller le matériau plastique au caoutchouc.

Le document JP H 06 134870 A décrit la liaison entre un caoutchouc à un élément en résine composite par chauffage induction.

### PRESENTATION DE L'INVENTION

Un but de l'invention est de proposer une solution permettant de réaliser l'assemblage structural par soudage d'un matériau thermoplastique et d'un matériau élastomère, l'attention étant portée sur ces deux familles de matériaux.

A cet effet l'invention a pour objet un procédé pour réaliser une liaison structurale soudée entre un matériau composite à matrice thermoplastique et un élastomère, ledit procédé comportant les opérations suivantes:
- une première opération de fonctionnalisation du matériau élastomère par incorporation dans le matériau élastomère cru d'une proportion donnée de poudre d'un matériau thermoplastique, la fonctionnalisation étant réalisée par réalisation d'une couche mince de matériau élastomère cru intégrant une proportion de poudre de matériau thermoplastique et fusion de ladite couche avec la couche principal de matériau élastomère durant l'opération de vulcanisation sous pression dudit matériau élastomère;
- une seconde opération de soudage proprement dit, durant laquelle on réalise le soudage du matériau composite thermoplastique à la couche fonctionnalisée du matériau élastomère.

Selon diverses dispositions particulières, pouvant être considérées en conjonction, le procédé selon l'invention peut par ailleurs présenter les caractéristiques qui suivent.

Selon une disposition particulière l'opération d'élaboration de l'élastomère fonctionnalisé comporte elle-même plusieurs étapes:
- une étape préliminaire A) de nettoyage des différentes parties du moule de vulcanisation utilisé;
- une première étape B) durant laquelle on prépare une couche fine d'élastomère cru pré-fonctionnalisée en incorporant, de manière homogène à cette couche d'élastomère une proportion donnée de poudre de matériau thermoplastique;
- une deuxième étape C) durant laquelle on applique la couche fine d'élastomère cru pré-fonctionnalisée à la surface du matériau élastomère
- une troisième étape D) durant laquelle on procède à la vulcanisation sous-pression du matériau élastomère; la pression appliquée étant déterminée de façon à ce que la couche fine d'élastomère cru pré-fonctionnalisée s'incorpore, au moins en surface, à la couche principale de matériau élastomère durant le processus de vulcanisation.

Selon une autre disposition particulière, le matériau thermoplastique incorporé à la couche fine de matériau élastomère est choisi de façon à pouvoir à la fois être soudé au matériau thermoplastique formant la matrice du matériau composite et à présenter une bonne compatibilité avec le matériau élastomère.

Selon une variante de la disposition précédente, le matériau thermoplastique incorporé à la couche fine de matériau élastomère est identique au matériau thermoplastique formant la matrice du matériau composite.

Selon une autre variante de la même disposition précédente, le matériau composite étant un composite carbone/polyétheréthercétone et le matériau élastomère étant de type HNBR, le matériau thermoplastique incorporé à la couche fine de matériau élastomère est un polyétherimide.

Selon une autre disposition particulière, le matériau thermoplastique est incorporé au matériau élastomère sous forme de particules d'un diamètre compris entre 20µm et 60µm, dans une proportion comprise entre 10% et 25% du mélange en masse.

Selon une autre disposition particulière, l'opération de soudage II) consiste à chauffer les surfaces de contact des deux matériaux à souder en interposant entre ces deux surfaces une toile métallique qui fait fonction de résistance chauffante, la toile métallique étant elle-même imprégnée de matériau thermoplastique.

Selon une variante de la disposition précédente, l'opération de soudage est précédée d'une opération préliminaire I) de préparation des surfaces des matériaux à assembler, cette opération pouvant consister, selon l'état de ces surfaces, soit en un simple dégraissage à l'aide d'un solvant approprié, soit en un ponçage fin de la surface fonctionnalisée de l'élément en élastomère, suivi d'un nettoyage des surfaces avec le même solvant.

Selon une autre disposition particulière, le matériau composite étant un composite carbone/polyétheréthercétone et le matériau élastomère étant de type HNBR, l'étape C) d'élaboration proprement dite de l'élastomère fonctionnalisé comporte les opérations suivantes:
a) une première opération de mise en place, sur le plateau inférieur du moule de vulcanisation, des éléments suivants:
   - deux couches superposées de tissu de verre téflonné;
   - un pli de matériau élastomère cru dans lequel a été incorporé de la poudre de polyétherimide;
   - les plis du matériau élastomère cru non vulcanisé;
   - un jeu de cales de bordurage;
   - deux couches superposées de tissu de verre téflonné; l'ensemble étant coiffé par le plateau supérieur du moule de vulcanisation;
b) une deuxième opération de mise en place de l'empilement réalisé sur le plateau d'une presse chauffante préchauffée à une température θ₂ de 140°C;
c) une troisième opération de pressage à chaud de l'empilement, durant laquelle on appliquer le cycle de pressage nominal adapté à l'élastomère considéré.
d) une quatrième opération durant laquelle on retire le moule de la presse alors que celle-ci maintient la température θ₂ de 140°C, on démoule l'élastomère fonctionnalisé et on laisse refroidir celui-ci à température ambiante.

Selon une variante de la disposition précédente, le cycle de pressage de la troisième opération comporte :
- une phase de montée progressive en température jusqu'à une température haute θ₁ de 230°C avec un gradient de 2.5°C/min,
- une phase de maintien à la température θ₁ durant 10 minutes,
- une phase de descente en température jusqu'à la température θ₂ de 140°C selon un gradient en 2.5°C/min.

Selon une autre disposition particulière, le matériau composite étant un composite carbone/polyétheréthercétone et le matériau élastomère étant de type HNBR, l'opération de soudage II) proprement dite comporte les étapes suivantes:
a) Une première étape de mise en place durant laquelle on dispose principalement, dans l'ordre, sur une plaque de matériau isolant thermique, les éléments suivants:
   - un premier film en polyimide résistant à la chaleur,
   - le matériau élastomère fonctionnalisé,
   - un premier film de polyétherimide,
   - une toile métallique préimprégnée de polyétherimide,
   - un second film de polyétherimide,
   - le matériau composite thermoplastique,
   - un second film en polyimide,
   - une couche d'isolant thermique,
   - un tissu de verre;
b) Une deuxième étape durant laquelle on réalise une vessie sous vide avec un film de polyimide disposé de façon à laisser la toile métallique ressortir, l'étanchéité de ladite vessie étant assurée au moyen de mastic à haute température.
c) Une troisième étape durant laquelle on met sous vide la vessie, on connecte un bloc d'alimentation électrique sur la toile métallique et on applique différentes valeurs d'intensité suivant un cycle approprié.
d) Une quatrième étape durant laquelle on retire le film de polyimide servant de bâche à vide et on démonte l'empilement.

Selon une variante de la disposition précédente, au cours de la troisième étape, on applique sur la toile métallique un courant de 15,6 ampères pendant 200 secondes puis un courant de 10 Ampères durant 100 secondes.

### DESCRIPTION DES FIGURES

Les caractéristiques et avantages de l'invention seront mieux appréciés grâce à la description qui suit, description qui s'appuie sur les figures annexées qui présentent:
- la figure1, une illustration schématique d'un exemple de structure pour laquelle l'assemblage par soudage des différents éléments semble particulièrement adapté, du fait des contraintes mécaniques imposées à cet assemblage;
- la figure 2, une illustration d'un exemple de mise en oeuvre de l'étape de fonctionnalisation de l'élastomère du procédé selon l'invention;
- la figure 3, une illustration d'un exemple de mise en oeuvre de l'opération de soudage selon l'invention.

### DESCRIPTION DETAILLEE

Le principe du procédé selon l'invention consiste principalement dans la mise en oeuvre avant le soudage proprement dit, d'une opération de préparation du matériau élastomère. Cette opération consiste à assembler au stade "élastomère cru", c'est-à-dire non vulcanisé, deux couches distinctes de matériau élastomère, une première couche, ou couche principale, de matériau élastomère cru homogène, et une seconde couche dite "pré-fonctionnalisée". L'opération de fonctionnalisation consiste ici à modifier la surface, ou le coeur même, de l'élastomère afin de lui conférer les propriétés nécessaires pour pouvoir le souder au matériau composite thermoplastique. Par "fonctionnaliser le matériau élastomère" on entend modifier la composition des couches superficielles de ce matériau en y incorporant un matériau thermoplastique.

A cet effet, pour réaliser la première couche dite "fonctionnalisée", on insère dans cette couche matériau élastomère cru, une proportion donnée de poudre d'un matériau thermoplastique présentant à la fois une compatibilité avec le matériau élastomère et pouvant être soudé à la matrice du matériau composite thermoplastique auquel on veut assembler le matériau élastomère considéré.

Par compatibilité entre le matériau élastomère et le matériau thermoplastique formant la poudre incorporée à ce matériau, on entend principalement, dans ce cas, une compatibilité physico-chimique entre les deux matériaux. Cette compatibilité se traduit par une interaction possible entre le matériau thermoplastique de la poudre incorporée et l'élastomère dans lequel on incorpore cette poudre, interaction qu'un homme du métier de la chimie des matières plastiques sait caractériser par des critères spécifiques, de nature plutôt chimique : mouillabilité, interdiffusion entre les matériaux, liaison chimiques.

Cependant, on s'intéresse également à une compatibilité de mise en oeuvre entre les différents matériaux (compatibilité physique), notamment en ce qui concerne la nécessité de pouvoir vulcaniser en température l'élastomère ainsi fonctionnalisé sans pour autant détériorer le matériau thermoplastique incorporé sous forme de poudre.

Selon l'invention, le processus d'élaboration de l'élastomère fonctionnalisé comporte plusieurs étapes:
A) une étape préalable de nettoyage des différentes parties du moule de vulcanisation, nettoyage réalisé, par exemple, au Méthyléthylcétone (ou MEC).
B) une première étape durant laquelle on prépare une couche fine de matériau élastomère cru, pré-fonctionnalisée en incorporant, de manière homogène à cette couche d'élastomère une proportion donnée de poudre de matériau thermoplastique;

Selon l'invention la proportion de poudre est déterminée en réalisant des essais mécaniques sur des éprouvettes de pelage, en ajustant cette proportion de façon à obtenir la valeur désirée de résistance au pelage, valeur égale à au moins 20N/mm.

Par ailleurs la granulométrie de la poudre est quant à elle choisie de façon à faciliter le mélange avec l'élastomère.

Selon l'invention également, Les différents constituants de l'élastomère cru, constitué par exemple de gomme de base d'huile de mise en oeuvre et de charges de silice, et la proportion de poudre de matériau thermoplastique sont mélangés dans un mélangeur fermé de type Werner. L'agent de vulcanisation au peroxyde est ensuite ajouté sur mélangeur ouvert. La dernière étape consiste à calandrer l'élastomère cru fonctionnalisé ainsi obtenu, de façon à réaliser la couche mince de l'épaisseur voulue.
C) une deuxième étape durant laquelle on applique la couche d'élastomère cru pré-fonctionnalisée à la surface du matériau élastomère cru à assembler au matériau composite thermoplastique et,
D) une troisième étape durant laquelle on procède à la vulcanisation sous-pression du matériau élastomère. Selon l'invention, la pression appliquée est déterminée de façon à ce que les deux couches de matériau élastomère fusionnent en surface durant le processus de vulcanisation.

On obtient un élastomère fonctionnalisé vulcanisé comportant une base d'élastomère classique recouverte d'une couche d'élastomère fonctionnalisé de faible épaisseur, une couche de 1 mm d'épaisseur par exemple.

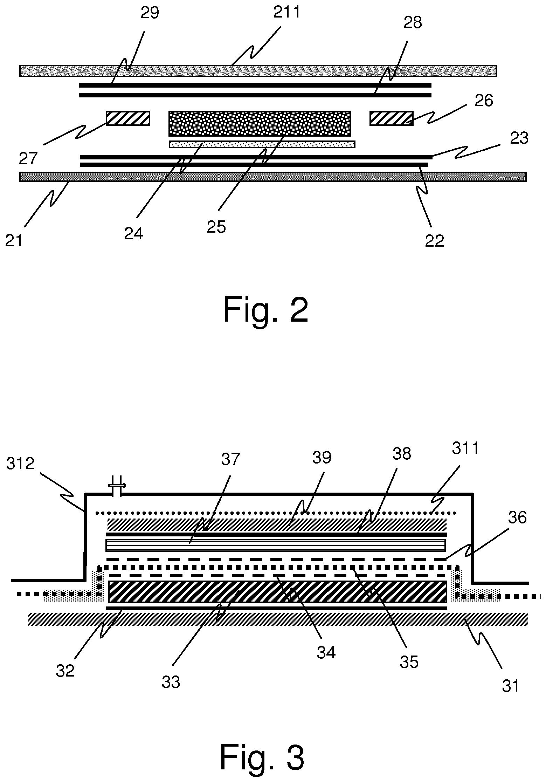

Ainsi par exemple, dans une forme de mise en oeuvre particulière de l'invention, adaptée plus particulièrement au soudage d'un matériau composite à matrice de polyétheréthercétone (PEEK) et à renfort en fibre de carbone (composite thermoplastique carbone/PEEK) avec un élastomère du type des caoutchoucs nitrile hydrogénés (butadiène-acrylonitrile hydrogénés), ou Buna ou encore HNBR (acronyme de la dénomination anglosaxonne ", hydrogenated nitrile butadiene rubber"), l'étape C) d'élaboration proprement dite de l'élastomère fonctionnalisé peut elle-même comporter les opérations suivantes:
a) Une première opération de mise en place, sur le plateau inférieur 21 du moule de vulcanisation, des éléments nécessaires à la mise en oeuvre de la fonctionnalisation du matériau élastomère, à savoir, dans l'ordre et comme illustré par la figure 2 :
   - deux couches superposées 22 et 23 de tissu de verre téflonné, dont le rôle consiste à permettre le démoulage de l'élastomère après polymérisation;
   - La couche d'élastomère cru 24 dans lequel a été incorporé de la poudre de Polyétherimide (ou PEI). La poudre choisie est une poudre de PEI, de l'Ultem® 1000 par exemple, qui présente un diamètre médian compris entre 20µm et 60µm, un diamètre de 45µm par exemple. La proportion de poudre incorporée a quant à elle une valeur comprise entre 10% et 25% du mélange global en masse, une valeur sensiblement égale à 20% par exemple.
   - les plis du matériau élastomère (HNBR) cru 25 (non vulcanisé), à fonctionnaliser,
   - un jeu de cales de bordurage 26, 27, des cales en acier inoxydable type 304L par exemple,
   - deux couches superposées 28 et 29 de tissu de verre téflonné, assurant un rôle analogue à celui assuré par les couches 22 et 23.

   Après mise en place, l'ensemble est coiffé par le plateau supérieur 211 du moule de vulcanisation de sorte que tous les éléments listés précédemment sont placés entre le plateau inférieur 21 et le plateau supérieur 211 du moule;
b) une deuxième opération de mise en place de l'empilement réalisé sur le plateau d'une presse chauffante préchauffée à une température θ₂ de 140°C;
c) une troisième opération de pressage à chaud de l'empilement, durant laquelle on appliquer le cycle de pressage nominal adapté à l'élastomère considéré, ce cycle comportant :
   - une phase de montée progressive en température jusqu'à une température haute θ₁ (230°C en 2.5°C/min),
   - une phase de maintien à la température θ₁ (palier de 10 minutes à 230°C),
   - une phase de descente en température jusqu'à la température θ₂ (140°C en 2.5°C/min);
d) une quatrième opération durant laquelle on retire le moule de la presse alors que celle-ci maintient la température θ₂ (140°C), on démoule l'élastomère fonctionnalisé et on laisse refroidir celui-ci à température ambiante.

On obtient ainsi, comme cela a été dit précédemment un élastomère vulcanisé fonctionnalisé en surface, comportant une base d'élastomère classique présentant une couche superficielle d'élastomère fonctionnalisé 24 formée d'un mélange d'élastomère et de matériau thermoplastique.

Dans une forme de réalisation particulière, le matériau thermoplastique utilisé pour réaliser l'opération de fonctionnalisation de l'élastomère est choisi dans le même matériau que celui qui constitue la matrice du matériau composite auquel on doit souder le matériau élastomère. Il est à noter cependant que le matériau thermoplastique utilisé peut être différent, notamment pour satisfaire au mieux la double exigence de bonne adhérence des deux matériaux thermoplastiques (i.e. celui du matériau composite et celui utilisé pour la fonctionnalisation de l'élastomère) et de bonne compatibilité du matériau utilisé pour la fonctionnalisation de l'élastomère et du matériau élastomère lui-même.

Une fois le matériau polymère fonctionnalisé, le procédé selon l'invention se poursuit par l'étape de soudage proprement dite, opération qui, grâce à la fonctionnalisation du matériau polymère se déroule avantageusement de manière analogue à une opération de soudage de deux pièces en matériau composite à matrice thermoplastique. Cette opération peut notamment être réalisée par induction ou par résistance.

Il est à noter, qu'avantageusement, l'opération de soudage n'est pas soumise à une quelconque contrainte de délai pour être réalisée, contrairement à ce qui est susceptible de se produire pour un assemblage par collage. Dans la mesure où le matériau élastomère fonctionnalisé est vulcanisé avant assemblage, le soudage des deux matériaux peut ainsi être réalisé au moment considéré comme le plus approprié, moment qui peut être plus ou moins éloigné dans le temps de celui d'achèvement de la fonctionnalisation.

La méthode par résistance consiste à chauffer localement l'interface entre le matériau composite et l'élastomère fonctionnalisé, pour obtenir une liaison entre la matrice thermoplastique du matériau composite et la partie thermoplastique de l'élastomère fonctionnalisé.

Selon l'invention, l'étape de soudage débute par une opération préliminaire I) de préparation des surfaces à assembler. Selon l'état de ces surfaces la préparation peut consister en un simple dégraissage à l'aide d'un solvant approprié, de l'éthanol par exemple, soit en un ponçage fin de la surface fonctionnalisée de l'élément en élastomère, avec un papier abrasif Sic de grain 400 par exemple, suivi d'un nettoyage, à l'aide du même solvant, des surfaces et en particulier de la surface poncée. Par solvant approprié on entend ici un solvant des corps gras qui par sa nature ou sa composition ne présente aucun risque d'occasionner une dissolution du matériau lui-même.

Elle se poursuit ensuite par l'opération II) de soudage proprement dite consistant à chauffer les surfaces de contact des deux matériaux à souder en interposant entre ces deux surfaces une toile métallique qui fait fonction de résistance chauffante; l'opération étant réalisée sous vide.

Selon l'invention la toile métallique est elle-même imprégnée de matériau thermoplastique, du PEI par exemple.

Ainsi par exemple, dans une forme de mise en oeuvre particulière de l'invention, adaptée plus particulièrement au soudage d'un matériau composite à matrice PEEK et à renfort en fibre de carbone (composite thermoplastique carbone/PEEK) avec un élastomère de type HNBR (Buna), l'opération II) de soudage proprement dite peut elle-même comporter les étapes suivantes:
a) Une première étape de mise en place durant laquelle, comme illustré par la figure 3, on dispose principalement, dans l'ordre, sur une plaque 31 de matériau isolant thermique, de NL FIH par exemple, les éléments suivants:
   - un premier film 32 en polyimide résistant à la chaleur, de préférence un film d'Upilex®, destiné à favoriser le désassemblage de l'ensemble après soudage,
   - le matériau élastomère fonctionnalisé 33,
   - un premier film 34 de polyétherimide (PEI), de type Ultem® 1000 *par exemple*,
   - une toile métallique 35 préimprégnée de PEI, par exemple une toile de référence 102083 fabriquée par la sté Gantois,
   - un second film 36 de polyétherimide (PEI),
   - le matériau composite thermoplastique 36 (C/PEEK) revêtu de PEI,
   - un second film 37 en polyimide Upilex destiné également à favoriser le désassemblage de l'ensemble après soudage,
   - une couche d'isolant thermique 38 (NL FIH),
   - un tissu de verre 311, de type E5555 par exemple, destiné à favoriser le drainage de l'air présent.
b) Une deuxième étape durant laquelle on réalise une vessie sous vide avec un film 312 de polyimide (Thermalimide) disposé de façon à laisser la toile métallique imprégnée de PEI ressortir ; l'étanchéité étant obtenue avec un mastic haute température A800 3G.
c) Une troisième étape durant laquelle on met sous vide la vessie 312 ainsi réalisée, on connecte un bloc d'alimentation électrique sur la toile métallique 35 et on applique différentes valeurs d'intensité suivant un cycle approprié: par exemple 15.6 ampères pendant 200 secondes puis 10 Ampères durant 100 secondes.
d) Une quatrième étape durant laquelle on retire le film de polyimide 312 servant de bâche à vide et on démonte l'empilement, de façon à récupérer l'assemblage élastomère-composite thermoplastique ainsi réalisé.

## Revendications

1. Procédé pour réaliser une liaison structurale soudée entre un matériau composite à matrice thermoplastique et un élastomère, comportant les opérations suivantes:
une première opération de fonctionnalisation du matériau élastomère par incorporation dans le matériau élastomère cru d'une proportion donnée de poudre d'un matériau thermoplastique, la fonctionnalisation étant réalisée par réalisation d'une couche mince (24) de matériau élastomère cru intégrant une proportion de poudre de matériau thermoplastique et fusion de ladite couche avec une couche principale (25) de matériau élastomère durant une opération de vulcanisation sous pression dudit matériau élastomère;
une seconde opération de soudage proprement dit, durant laquelle on réalise le soudage du matériau composite thermoplastique à la couche fonctionnalisée du matériau élastomère.

2. Procédé selon la revendication 1, **caractérisé en ce que** l'opération d'élaboration de l'élastomère fonctionnalisé comporte elle-même plusieurs étapes:
une étape préliminaire A) de nettoyage des différentes parties d'un moule de vulcanisation (21, 211);
une première étape B) durant laquelle on prépare une couche fine (24) d'élastomère cru pré-fonctionnalisée en incorporant, de manière homogène à cette couche d'élastomère une proportion donnée de poudre de matériau thermoplastique;
une deuxième étape C) durant laquelle on applique la couche fine d'élastomère cru pré-fonctionnalisée à la surface du matériau élastomère (25);
une troisième étape D) durant laquelle on procède à la vulcanisation sous-pression du matériau élastomère; la pression appliquée étant déterminée de façon à ce que la couche fine (24) d'élastomère cru pré-fonctionnalisée s'incorpore, au moins en surface, à la couche principale (25) de matériau élastomère durant le processus de vulcanisation.

3. Procédé selon l'une des revendications 1 ou 2, **caractérisé en ce que** le matériau thermoplastique incorporé à la couche fine (24) de matériau élastomère est choisi de façon à pouvoir à la fois être soudé au matériau thermoplastique formant la matrice du matériau composite et à présenter une bonne compatibilité avec le matériau élastomère.

4. Procédé selon la revendication 3, **caractérisé en ce que** le matériau thermoplastique incorporé à la couche fine (24) de matériau élastomère est identique au matériau thermoplastique formant la matrice du matériau composite.

5. Procédé selon l'une quelconque des revendications 1 à 3, **caractérisé en ce que**, le matériau composite étant un composite carbone/polyétheréthercétone et le matériau élastomère étant de type HNBR, le matériau thermoplastique incorporé à la couche fine de matériau élastomère est un polyétherimide.

6. Procédé selon la revendication 5, **caractérisé en ce que** le matériau thermoplastique est incorporé au matériau élastomère sous forme de particules d'un diamètre compris entre 20µm et 60µm, dans une proportion comprise entre 10% et 25% du mélange en masse.

7. Procédé selon l'une quelconque des revendications précédentes, **caractérisé en ce que** l'opération de soudage consiste à chauffer les surfaces de contact des deux matériaux à souder en interposant entre ces deux surfaces une toile métallique (35) qui fait fonction de résistance chauffante, la toile métallique étant elle-même imprégnée de matériau thermoplastique.

8. Procédé selon la revendication 7, **caractérisé en ce que** l'opération de soudage est précédée d'une opération préliminaire I) de préparation des surfaces des matériaux à assembler, cette opération pouvant consister, selon l'état de ces surfaces, soit en un simple dégraissage à l'aide d'un solvant approprié, soit en un ponçage fin de la surface fonctionnalisée de l'élément en élastomère, suivi d'un nettoyage des surfaces avec le même solvant.

9. Procédé selon l'une quelconque des revendications précédentes 1 à 3 ou 5 à 8, **caractérisé en ce que**, le matériau composite étant un composite carbone/polyétheréthercétone et le matériau élastomère étant de type HNBR, l'étape C) d'élaboration proprement dite de l'élastomère fonctionnalisé comporte les opérations suivantes:
une première opération de mise en place, sur le plateau inférieur (21) du moule de vulcanisation, des éléments suivants:
deux couches superposées (22, 23) de tissu de verre téflonné;
un pli de matériau élastomère cru (24) dans lequel a été incorporé de la poudre de polyétherimide;
les plis du matériau élastomère cru (25) non vulcanisé;
un jeu de cales de bordurage (26, 27);
deux couches superposées (28, 29) de tissu de verre téflonné;
l'ensemble étant coiffé par le plateau supérieur (211) du moule de vulcanisation;
une deuxième opération de mise en place de l'empilement réalisé sur le plateau d'une presse chauffante préchauffée à une température θ₂ de 140°C;
une troisième opération de pressage à chaud de l'empilement, durant laquelle on appliquer le cycle de pressage nominal adapté à l'élastomère considéré.
une quatrième opération durant laquelle on retire le moule de la presse alors que celle-ci maintient la température θ₂ de 140°C, on démoule l'élastomère fonctionnalisé et on laisse refroidir celui-ci à température ambiante.

10. Procédé selon la revendication 9, **caractérisé en ce que** le cycle de pressage de la troisième opération comporte :
une phase de montée progressive en température jusqu'à une température haute θ₁ de 230°C avec un gradient de 2.5°C/min,
une phase de maintien à la température θ₁ durant 10 minutes,
une phase de descente en température jusqu'à la température θ₂ de 140°C selon un gradient en 2.5°C/min.

11. Procédé selon l'une quelconque des revendications précédentes, **caractérisé en ce que**, le matériau composite étant un composite carbone/polyétheréthercétone et le matériau élastomère étant de type HNBR, l'opération de soudage proprement dite comporte les étapes suivantes:
Une première étape de mise en place durant laquelle on dispose principalement, dans l'ordre, sur une plaque (31) de matériau isolant thermique, les éléments suivants:
un premier film (32) en polyimide résistant à la chaleur,
le matériau élastomère fonctionnalisé (33),
un premier film (34) de polyétherimide,
une toile métallique (35) préimprégnée de polyétherimide,
un second film (36) de polyétherimide,
le matériau composite thermoplastique (36),
un second film (37) en polyimide,
une couche d'isolant thermique (38),
un tissu de verre (311);
Une deuxième étape durant laquelle on réalise une vessie sous vide avec un film (312) de polyimide disposé de façon à laisser la toile métallique (35) ressortir, l'étanchéité de ladite vessie étant assurée au moyen de mastic à haute température.
Une troisième étape durant laquelle on met sous vide la vessie (312), on connecte un bloc d'alimentation électrique sur la toile métallique (35) et on applique différentes valeurs d'intensité suivant un cycle approprié.
Une quatrième étape durant laquelle on retire le film de polyimide (312) servant de bâche à vide et on démonte l'empilement.

12. Procédé selon la revendication 11, **caractérisé en ce qu'**au cours de la troisième étape on applique sur la toile métallique (35) un courant de 15.6 ampères pendant 200 secondes puis un courant de 10 Ampères durant 100 secondes.

## Patentansprüche

1. Verfahren zum Herstellen einer geschweißten Strukturverbindung zwischen einem thermoplastischen Matrixverbundstoff und einem Elastomer, das die folgenden Vorgänge aufweist:
einen ersten Vorgang der Funktionalisierung des Elastomermaterials durch Einbringen eines bestimmten Anteils an Pulver eines thermoplastischen Materials in das Rohelastomermaterial, wobei die Funktionalisierung durchgeführt wird, indem eine dünne Schicht (24) aus Rohelastomermaterial hergestellt wird, die einen Anteil an Pulver aus thermoplastischem Material enthält, und die Schicht mit einer Hauptschicht (25) aus Elastomermaterial während eines Unterdruckvulkanisationsvorgangs des Elastomermaterials geschmolzen wird;
einen zweiten eigentlichen Schweißvorgang, während dessen der thermoplastische Verbundstoff mit der funktionalisierten Schicht des Elastomermaterials verschweißt wird.

2. Verfahren nach Anspruch 1, **dadurch gekennzeichnet, dass** der Vorgang zur Herstellung des funktionalisierten Elastomers selbst mehrere Schritte aufweist:
einen Vorschritt A) zur Reinigung der verschiedenen Teile einer Vulkanisierform (21, 211);
einen ersten Schritt B), bei dem eine dünne Schicht (24) aus vorfunktionalisiertem Rohelastomer hergestellt wird, indem ein bestimmter Anteil an Pulver aus thermoplastischem Material homogen in diese Elastomerschicht eingebracht wird;
einen zweiten Schritt C), bei dem die dünne Schicht aus vorfunktionalisiertem Rohelastomer auf die Oberfläche des Elastomermaterials (25) aufgebracht wird;
einen dritten Schritt D), bei dem die Unterdruckvulkanisation des Elastomermaterials durchgeführt wird; wobei der angewandte Druck so bestimmt wird, dass die dünne Schicht (24) aus vorfunktionalisiertem Rohelastomer während des Vulkanisationsprozesses mindestens an der Oberfläche in die Hauptschicht (25) aus Elastomermaterial eingebracht wird.

3. Verfahren nach einem der Ansprüche 1 oder 2, **dadurch gekennzeichnet, dass** das in die dünne Schicht (24) aus Elastomermaterial eingebrachte thermoplastische Material so ausgewählt ist, dass es sowohl mit dem die Matrix des Verbundstoffs bildenden thermoplastischen Material schweißbar ist als auch eine gute Kompatibilität mit dem Elastomermaterial aufweist.

4. Verfahren nach Anspruch 3, **dadurch gekennzeichnet, dass** das in die dünne Schicht (24) aus Elastomermaterial eingebrachte thermoplastische Material identisch ist mit dem die Matrix des Verbundstoffs bildenden thermoplastischen Material.

5. Verfahren nach einem der Ansprüche 1 bis 3, **dadurch gekennzeichnet, dass** der Verbundstoff ein Kohlenstoff/Polyetheretherketon-Verbund ist und das Elastomermaterial vom Typ HNBR ist, wobei das in die dünne Schicht aus Elastomermaterial eingebrachte thermoplastische Material ein Polyetherimid ist.

6. Verfahren nach Anspruch 5, **dadurch gekennzeichnet, dass** das thermoplastische Material in Form von Partikeln mit einem Durchmesser zwischen 20 µm und 60 µm in das Elastomermaterial eingebracht wird, in einem Verhältnis zwischen 10 Masse-% und 25 Masse-% der Mischung.

7. Verfahren nach einem der vorstehenden Ansprüche, **dadurch gekennzeichnet, dass** der Schweißvorgang darin besteht, die Kontaktflächen der beiden zu schweißenden Materialien zu erhitzen, indem zwischen diese beiden Oberflächen ein Drahtgewebe (35) eingefügt wird, das als Heizwiderstand wirkt, wobei das Drahtgewebe selbst mit thermoplastischem Material imprägniert wird.

8. Verfahren nach Anspruch 7, **dadurch gekennzeichnet, dass** dem Schweißvorgang ein Vorarbeitsgang I) zur Vorbereitung der Oberflächen der zu verbindenden Materialien vorausgeht, der je nach Zustand dieser Oberflächen entweder aus einer einfachen Entfettung mit einem geeigneten Lösungsmittel oder einem Feinschleifen der funktionalisierten Oberfläche des Elastomerelements bestehen kann, gefolgt von einer Reinigung der Oberflächen mit dem gleichen Lösungsmittel.

9. Verfahren nach einem der vorstehenden Ansprüche 1 bis 3 oder 5 bis 8, **dadurch gekennzeichnet, dass** der Verbundstoff ein Kohlenstoff/Polyetheretherketon-Verbund ist und das Elastomermaterial vom Typ HNBR ist, Schritt C) der eigentlichen Herstellung des funktionalisierten Elastomers die folgenden Vorgänge aufweist:
einen ersten Vorgang zur Platzierung der folgenden Elemente auf der unteren Platte (21) der Vulkanisierform:
zwei übereinanderliegende Schichten (22, 23) aus teflonbeschichtetem Glasgewebe,
eine Faltung aus Rohelastomermaterial (24), in die Polyetherimidpulver eingebracht wurde,
die Faltungen des nicht vulkanisierten Rohelastomermaterials (25),
einen Satz von Randbildungskeilen (26, 27),
zwei übereinanderliegende Schichten (28, 29) aus teflonbeschichtetem Glasgewebe,
wobei die Anordnung durch die obere Platte (211) der Vulkanisierform abgedeckt ist;
einen zweiten Vorgang zur Platzierung des Stapels auf der Platte einer vorgeheizten Heizpresse bei einer Temperatur θ₂ von 140°C;
einen dritten Heißpressvorgang des Stapels, bei dem der dem jeweiligen Elastomer angepasste nominelle Presszyklus angewendet wird;
einen vierten Vorgang, bei dem die Form aus der Presse entnommen wird, während die Presse die Temperatur θ₂ von 140°C hält, das funktionalisierte Elastomer entfernt und auf Raumtemperatur abkühlen lässt.

10. Verfahren nach Anspruch 9, **dadurch gekennzeichnet, dass** der Presszyklus des dritten Vorgangs Folgendes aufweist:
eine Phase des progressiven Temperaturanstiegs auf eine hohe Temperatur θ₁ von 230°C mit einem Gradienten von 2,5°C/min,
eine Phase des Temperaturerhalts θ₁ für 10 Minuten,
eine Phase des Temperaturabfalls auf die Temperatur θ₂ von 140°C nach einem Gradienten von 2,5°C/min.

11. Verfahren nach einem der vorstehenden Ansprüche, **dadurch gekennzeichnet, dass** der Verbundstoff ein Kohlenstoff/Polyetheretherketon-Verbund ist und das Elastomermaterial vom Typ HNBR ist, der eigentliche Schweißvorgang die folgenden Schritte aufweist:
einen ersten Schritt der Platzierung, bei der die folgenden Elemente hauptsächlich in dieser Reihenfolge auf einer Platte (31) aus Wärmeisolationsmaterial angeordnet werden:
eine erste hitzebeständige Polyimidfolie (32),
das funktionalisierte Elastomermaterial (33),
eine erste Polyetherimidfolie (34),
ein Drahtgewebe (35), das mit Polyetherimid vorimprägniert ist,
eine zweite Polyetherimidfolie (36),
der thermoplastische Verbundstoff (36),
eine zweite Polyimidfolie (37),
eine Wärmeisolationsschicht (38),
ein Glasgewebe (311);
einen zweiten Schritt, bei dem eine Vakuumblase mit einer Polyimidfolie (312) hergestellt wird, die so angeordnet ist, dass das Drahtgewebe (35) austreten kann, wobei die Abdichtung der Blase durch Hochtemperaturmastix gewährleistet ist;
einen dritten Schritt, bei dem die Blase (312) entleert wird, eine elektrische Stromversorgungseinheit mit dem Drahtgewebe (35) verbunden ist und in einem geeigneten Zyklus unterschiedliche Intensitätswerte aufgebracht werden;
einen vierten Schritt, bei dem die als Vakuumplane verwendete Polyimidfolie (312) entfernt und der Stapel demontiert wird.

12. Verfahren nach Anspruch 11, **dadurch gekennzeichnet, dass** im dritten Schritt ein Strom von 15,6 Ampere für 200 Sekunden und dann ein Strom von 10 Ampere für 100 Sekunden auf das Drahtgewebe (35) aufgebracht wird.

## Claims

1. Method for producing a welded structural link between a thermoplastic matrix composite material and an elastomer, comprising the following operations:
a first operation of functionalising the elastomeric material by incorporating into the green elastomeric material a given proportion of powder of a thermoplastic material, the functionalising being carried out by forming a thin layer (24) of green elastomeric material integrating a proportion of thermoplastic material powder and melting of said layer with a main layer (25) of elastomeric material during an operation of pressure-vulcanising said elastomeric material;
a second welding operation per se, during which the welding of the thermoplastic composite material to the functionalised layer of the elastomeric material is carried out.

2. Method according to claim 1, **characterised in that** the operation of elaborating the functionalised elastomer itself comprises several steps:
a preliminary step A) of cleaning the various portions of a vulcanising mould (21, 211);
a first step B) during which a thin layer (24) of a pre-functionalised green elastomer is prepared by incorporating, homogeneously into this layer of elastomer a given proportion of thermoplastic material powder;
a second step C) during which the thin layer of pre-functionalised green elastomer is applied to the surface of the elastomeric material (25);
a third step D) during which the pressure-vulcanising of the elastomeric material is carried out; the pressure applied being determined in such a way that the thin layer (24) of pre-functionalised green elastomer is incorporated, at least on the surface, into the main layer (25) of elastomeric material during the vulcanising process.

3. Method according to one of claims 1 or 2, **characterised in that** the thermoplastic material incorporated into the thin layer (24) of elastomeric material is chosen in such a way as to be able to be welded to the thermoplastic material forming the matrix of the composite material and to have good compatibility with the elastomeric material.

4. Method according to claim 3, **characterised in that** the thermoplastic material incorporated into the thin layer (24) of elastomeric material is identical to the thermoplastic material forming the matrix of the composite material.

5. Method according to any of claims 1 to 3, **characterised in that**, the composite material being a carbon composite/polyetheretherketone and the elastomeric material being of the HNBR type, the thermoplastic material incorporated into the thin layer of elastomeric material is a polyetherimide.

6. Method according to claim 5, **characterised in that** the thermoplastic material is incorporated into elastomeric material in the form of particles with a diameter between 20 µm and 60 µm, in a proportion between 10 % and 25 % of the mixture by weight.

7. Method according to any of the preceding claims, **characterised in that** the welding operation consists in heating the contact surfaces of the two materials to be welded by interposing between these two surfaces a metal fabric (35) that acts as a heating resistance, the metal fabric being itself impregnated with thermoplastic material.

8. Method according to claim 7, **characterised in that** the welding operation is preceded by a preliminary operation I) of preparing surfaces of the materials to be assembled, this operation able to consist, according to the condition of these surfaces, either in a simple degreasing using a suitable solvent, or in a fine sanding of the functionalised surface of the element made of elastomer, followed by a cleaning of the surfaces with the same solvent.

9. Method according to any of the preceding claims 1 to 3 or 5 to 8, **characterised in that**, the composite material being a carbon composite/polyetheretherketone and the elastomeric material being of the HNBR type, the step C) of elaborating per se of the functionalised elastomer comprises the following operations:
a first operation of setting in place, on the lower plateau (21) of the vulcanising mould, the following elements:
two superimposed layers (22, 23) of Teflon-coated fibreglass,
a fold of green elastomeric material (24) wherein polyetherimide powder has been incorporated,
the folds of the green non-vulcanised elastomeric material (25),
a set of edging shims (26, 27),
two superimposed layers (28, 29) of Teflon-coated fibreglass,
the whole being covered by the upper plateau (211) of the vulcanising mould;
a second operation of setting in place the stack formed on the plateau of a heating press preheated to a temperature θ₂ of 140 °C;
a third operation of hot pressing of the stack, during which the suitable nominal pressure cycle is applied to the elastomer in question;
a fourth operation during which the mould is removed from the press while the latter maintains the temperature θ₂ of 140 °C, the functionalised elastomer is released and the latter is allowed to cool to ambient temperature.

10. Method according to claim 9, **characterised in that** the pressing cycle of the third operation comprises:
a phase of a progressive rising in temperature until a high temperature θ₁ of 230 °C with a gradient of 2.5 °C/min,
a phase of maintaining at the temperature θ₁ for 10 minutes,
a phase of lowering the temperature to the temperature θ₂ of 140 °C according to a gradient of 2.5 °C/min.

11. Method according to any of the preceding claims, **characterised in that**, the composite material being a carbon composite/polyetheretherketone and the elastomeric material being of the HNBR type, the welding operation per se comprises the following steps:
a first step of setting in place during which the following elements are arranged mainly, in order, on a plate (31) of thermal insulating material:
a first film (32) made of heat-resistant polyimide,
the functionalised elastomeric material (33),
a first polyetherimide film (34),
a metal fabric (35) pre-impregnated with polyetherimide,
a second polyetherimide film (36),
the thermoplastic composite material (36),
a second polyimide film (37),
a layer of thermal insulation (38),
a fibreglass (311);
a second step during which a bladder is vacuum-produced with a polyimide film (312) arranged in such a way as to allow the metal fabric (35) to exit, the seal of said bladder being provided by means of high-temperature mastic;
a third step during which the bladder (312) is placed in a vacuum, an electrical power supply unit is connected on the metal fabric (35) and various values of intensity are applied according to a suitable cycle;
a fourth step during which the polyimide film (312) used as a vacuum pack is removed and the stack is disassembled.

12. Method according to claim 11, **characterised in that** during the third step a current of 15.6 amperes is applied on the metal fabric (35) for 200 seconds then a current of 10 amperes for 100 seconds.
